# EUROPEAN PATENT APPLICATION

(11) **EP 2 439 448 A1**
(43) Date of publication of application: **11.04.2012**
(21) Application number: 11175318.2
(22) Date of filing: 26.07.2011
(51) Int. Cl.: F23D 11/38, F23K 5/16, F23R 3/28, F02C 7/22, G01M 3/28

(54) **Method and device for detecting liquid fuel leakage in a gas turbine system combustion assembly**

(30) Priority: 26.07.2010 IT MI20101372
(71) Applicant: Ansaldo Energia S.p.A., Genova (IT)
(72) Inventor: Pastorino, Pierpaolo, 16125 Genova (IT); Grasso, Luciano, 16164 Genova (IT); Pesce, Paolo, 16152 Genova (IT)
(74) Representative: Jorio, Paolo

(57) **Abstract**

A method of detecting liquid fuel leakage in a gas turbine system combustion assembly (1) provided with a combustion chamber (2) having a plurality of diffusion nozzles (15) and a feed circuit (3), which feeds liquid fuel to the combustion chamber (2) and comprises a diffusion section (19) for supplying the diffusion nozzles (15), includes:
- sealing the diffusion nozzle (15) of each burner assembly (5);
- feeding a pressurized test fluid along the diffusion section (19);
- checking for test fluid leakage along the diffusion section (19).

## Description

The present invention relates to a method and device for detecting liquid fuel leakage in a gas turbine system combustion assembly.

Combustion assemblies of known type comprise a combustion chamber and a feeding circuit of the combustion chamber.

In the gas turbine system sector monitoring the leakages of fuel is of crucial importance.

Gaseous fuel leakages are normally indicated by specific gas detectors installed in the enclosure which encloses the combustion assembly during operation. The detector sends an alarm signal as soon as a concentration of gas higher than the danger threshold is detected. The protection system causes the gas turbine to shut down if the concentration increases or the cause of the leakage is not eliminated.

No reliable methods are available for detecting leakage of liquid fuel.

However, the leakages of liquid fuel are very dangerous. Liquid fuel which flow out due to a leakage often reaches the hot parts of the system, which are thermally insulated by means of pads made of insulating fibers. If the liquid fuel penetrates in these pads and reaches the metallic parts of the machine, it can catch fire and the fire which develops is difficult to control because the pads are soaked in liquid fuel.

Controlling the tightness of pipes in which liquid fuel flows is thus a need highly felt by manufacturers and users.

It is thus an object of the present invention to provide a method for detecting liquid fuel leakage in a gas turbine system combustion assembly which is simple and reliable.

In accordance with such an object, the present invention relates to a method of detecting liquid fuel leakages in a gas turbine system combustion assembly, the combustion assembly comprising a combustion chamber equipped with a plurality of burner assemblies, each of which comprises a diffusion nozzle and at least one premix nozzle, and a feed circuit, which feeds liquid fuel to the combustion chamber and comprises a diffusion section for supplying the diffusion nozzles, and a premix section for supplying the premix nozzles;
the method comprising the steps of:
- sealing the diffusion nozzle of each burner assembly;
- feeding a pressurized test fluid along the diffusion section;
- checking for test fluid leakage along the diffusion section.

It is thus a further object of the present invention to provide a device for detecting liquid fuel leakages in a gas turbine system combustion assembly which is simple and reliable.

In accordance with such objects, the present invention relates to a device for detecting liquid fuel leakages in a gas turbine system combustion assembly, the combustion assembly comprising a combustion chamber equipped with a plurality of burner assemblies, each comprising a diffusion nozzle and at least one premix nozzle, and a feed circuit, which feeds liquid fuel to the combustion chamber and comprises a diffusion section for supplying the diffusion nozzles, and a premix section for supplying the premix nozzles, the device comprising at least one stopper for sealing the diffusion nozzle of the burner assembly.

Further features and advantages of the present invention will be apparent from the following description of a non-limitative embodiment thereof, with reference to the figures in the accompanying drawings, in which:
- figure 1 is a diagrammatic view of a combustion assembly of a gas turbine system;
- figure 2 is a perspective view, with parts in section and parts removed for clarity, of a detail of the combustion assembly in figure 1;
- figure 3 is a diagrammatic view with parts in section and parts removed for clarity of a detail of the device for detecting leakages of liquid fuel in a combustion assembly of a gas turbine system in a first operating position;
- figure 4 is a diagrammatic view, with parts in section and parts removed for clarity, of the detail in figure 3 in a second operative position.

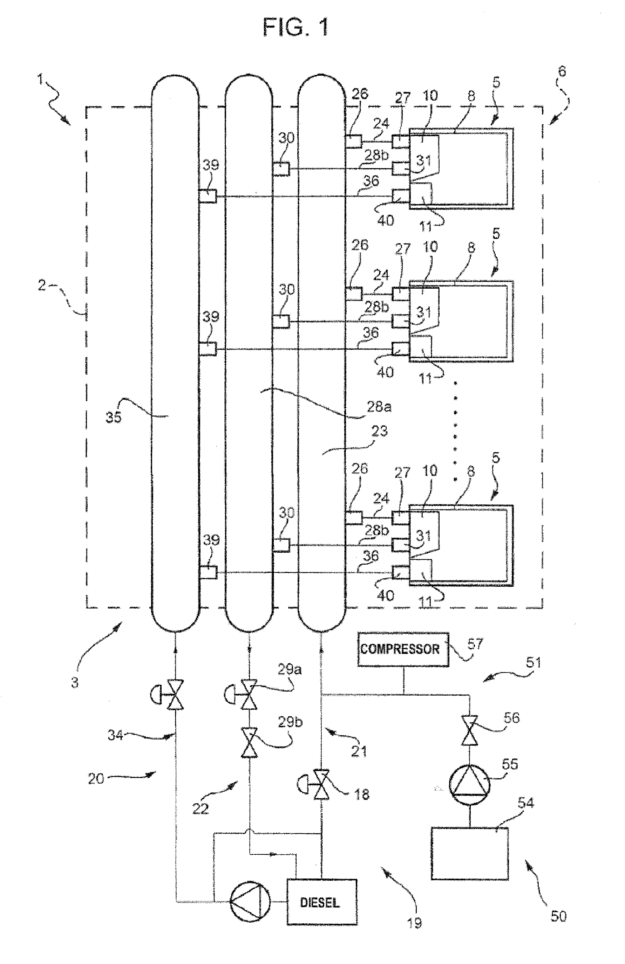

In figure 1, reference number 1 indicates a combustion assembly comprising a combustion chamber 2 and a feeding circuit 3 for feeding liquid fuel to the combustion chamber 2.

The combustion chamber 2 is preferably of the annular type and comprises a plurality of burners 5 (diagrammatically shown in figure 1 with a box) arranged along a circular path in proximity of a peripheral annular edge 6 of the combustion chamber 2.

There are twenty-four burners 5 in the non-limiting example described and shown herein.

Each burner assembly 5 comprises a liquid fuel burner 8 connected to the fuel feeding circuit 3.

The liquid fuel normally used is diesel.

Preferably, the burner assembly 5 also comprises a gas burner (not shown in the accompanying figures).

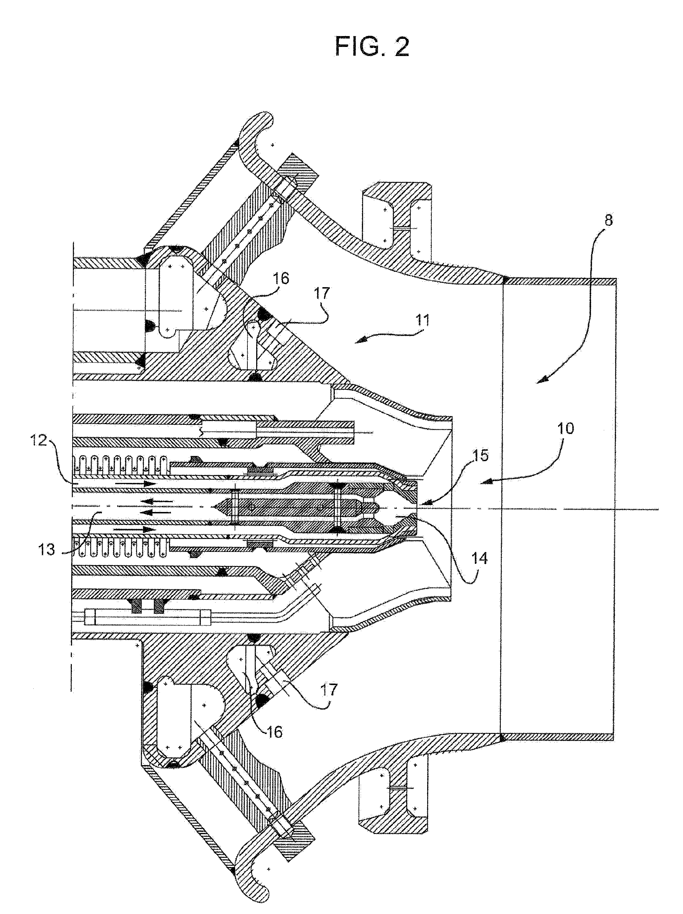

With reference to figure 2, the liquid fuel burner 8 comprises a diffusion burner member 10 and a premix burner member 11. The diffusion burner member 10 comprises a delivery pipe 12, a return pipe 13, an intermediate chamber 14 and a diffusion nozzle 15.

The premix burner member 11 comprises a main annular pipe 16 and a plurality of premix nozzles 17. In the example described and illustrated herein, there are eighteen/twenty premix nozzles 17 (of which only two are shown in the accompanying figures).

With reference to figure 1, the feeding circuit 3 comprises a diffusion section 19 connected to the diffusion burner members 10 and a premix section 20 connected to the premix burner members 11.

The diffusion section 19 comprises a diesel delivery line 21 and a diesel return line 22.

The diesel delivery line 21 is provided with a delivery valve 18, a toroidal manifold 23 and a plurality of diesel delivery pipes 24 for connecting the manifold 23 to the respective diffusion burners 10.

Each diesel delivery pipe 24 is connected to the manifold 23 by means of a head connector 26 and to the diffusion burner member 10 by means of a tail connector 27.

The diesel return line 22 is provided with a respective toroidal manifold 28a and a plurality of a diesel return pipes 28b for connecting the diffusion burner members 10 to the manifold 28a, a return valve 29a and a stop valve 29b.

Each diesel return pipe 28b is connected to the manifold 28a by means of a head connector 30 and to the diffusion burner member 10 by means of a tail connector 31.

The premix section 20 comprises a premix delivery line 34, provided with a respective toroidal manifold 35 and a plurality of tubes 36 which connect the manifold 35 to the premix burner members 11.

Each pipe 36 is connected to the manifold 35 by means of a head connector 39 and to the premix burner member 11 by means of a tail connector 40.

In figure 1, reference numeral 50 indicates a device for detecting leakages of liquid fuel in a burner assembly of a gas turbine system according to the present invention.

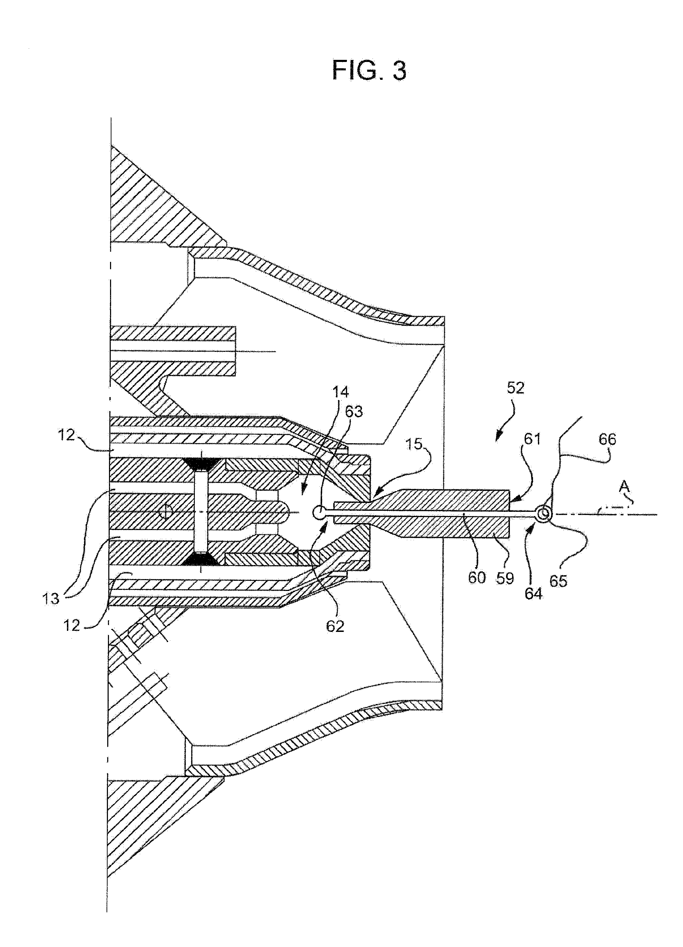

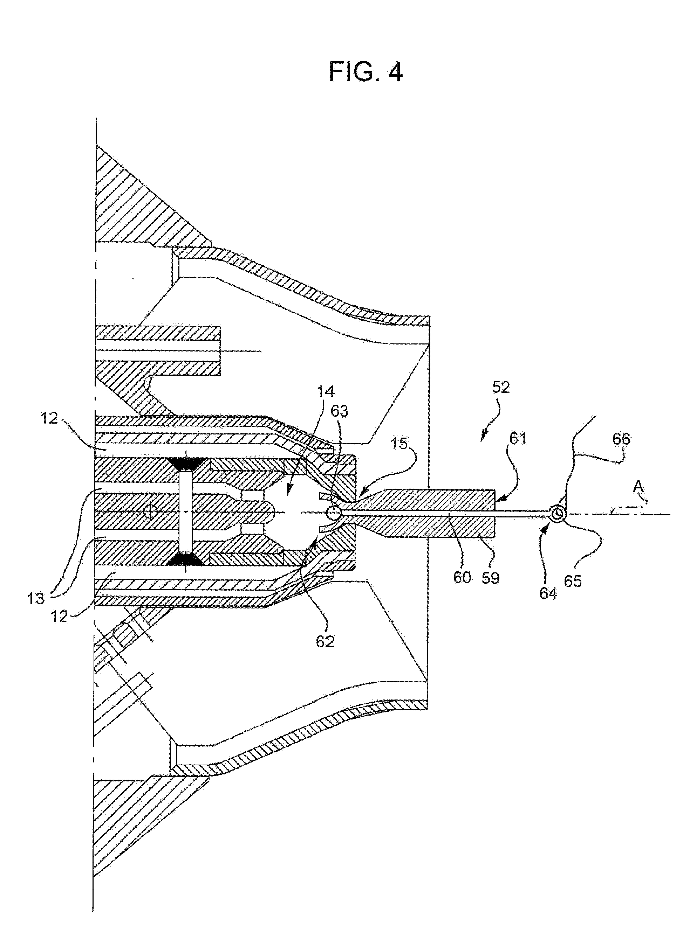

The device 50 comprises an injection assembly 51 for injecting a test fluid into a feed circuit and a plurality of stopper members 52 (of which only one is visible in figures 3 and 4).

The injection assembly 51 is connected to the diesel delivery line 21 upstream of the manifold 23 and comprises a tank 54 containing the test fluid, a pump 55 configured to take the test fluid from the tank and introduce it into the diesel delivery line 21 and a valve 56, arranged upstream of the pump 55.

The pump 55 is preferably a centrifugal pump configured to pump the test fluid at a pressure comprised between roughly 1 and 20 bars.

The test fluid is preferably water.

According to a variant of the present invention, the test fluid is liquid nitrogen (pumped by the pump 55 at a roughly 20 bars).

Preferably, the injection assembly 51 also comprises an air compressor 57. In the non-limitative example described and illustrated herein, the compressor 57 is portable and configured to compress air at roughly 7 bars.

According to a variant (not shown) of the present invention, the compressor is not present and the compressed air is taken directly by the gas turbine system.

With reference to figure 3, each stopper member 52 is adapted to be inserted in the respective diffusion nozzle 15 to shut it.

Each stopper member 52 comprises a main body 59 and a moveable member 60.

The main body 59 extends along a longitudinal axis A, is essentially cylinder-shaped and is made of deformable material. In particular, the main body 59 is an appropriately shaped pipe made of silicone rubber and provided with a central hole 61, which extends along the longitudinal axis A.

The moveable member 60 is partially inserted in the central hole 61 of the main body 59 and has a first end 62 provided with a head 63 and a second end 64 provided with an eyelet 65.

The head 63 and eyelet 65 are arranged outside the central hole 61.

In particular, the section of the head 63 is larger than the central hole 61 and smaller than the open section of the diffusion nozzle 15, so as to be able to enter into the intermediate chamber 14 through the diffusion nozzle 10.

Preferably, the head 63 has a substantially spherical shape.

The eyelet 65 is preferably coupled to a recovery member 66 to prevent the stopper member 52 from being lost in the combustion chamber 2 in case of ejection. In the non-limitative example described and illustrated herein, the recovery member 66 is a wire.

The moveable member 60 is mobile between an open position and a closed position.

In the open position, shown in figure 3, the head 63 is not in contact with main body 59 and the main body 59 is not deformed.

In the closed position, shown in figure 4, the head 63 is arranged abuttingly against the main body 59 to shut the central hole 61 and deform the main body 59 so that it adapts to the profile of the diffusion nozzle 15 and shuts it.

The sum of the thickness of the head 63 and of the main body 59 so that the diameter of the stopper element 52 is larger than that of the diffusion nozzle 10 and completely shuts it.

Furthermore, if a pressure increase occurs within the intermediate chamber 14, the head 63 is further pressed against the main body 59 so as to guarantee an optimal shutting of the diffusion nozzle 15.

With reference to figure 1, the method for detecting leakages of liquid fuel from a combustion assembly 2 contemplates detecting leakages along the diffusion section 19 and then detecting leakages along the premix section 20.

The step of detecting leakages along the diffusion section 19 essentially includes sealing all diffusion nozzles 15 by means of respective stopper members 52, feeding the pressurized test liquid to the diesel delivery line 21 by means of the pump 55; and detecting the leakages along the diffusion section 19.

The step of sealing the diffusion nozzles 15 includes inserting shutter elements 52 in the respective diffusion nozzles 15 (figure 3) and arranging them in the closed position (figure 4).

The step of feeding the test fluid contemplates closing the valves 29a, 29b and 18, opening the valve 56 and activating the pump 55.

The test fluid is pumped at a pressure comprised between roughly 7 and roughly 20 bars along the diffusion section 19.

The step of detecting the leakages includes applying a detecting fluid in the critical points of the diffusion section 19 and monitoring the diffusion section 19 while the pressurized test fluid is fed to the diesel delivery line 21. Critical points are the head connectors 26, 30, the tail connectors 27 31 and the threaded connections of the diffusion section 19.

The detecting fluid is preferably a surfactant which generates bubbles when invested by a high pressure fluid. In case of leakage, indeed, the pressurized test fluid invests the detector fluid creating bubbles.

Preferably, the method according to the present invention includes carrying out a tightness test with low pressure compressed air (up to roughly 7 bars) before testing with test fluid at higher pressures (more than 30 bars).

In essence, the method includes sealing all the diffusion nozzles 15 by means of the respective stopper elements 52, feeding compressed air to the diesel delivery line 21 by means of the compressor 57, detecting the leakages of air along the diffusion section 19; feeding the pressurized test fluid to the diesel delivery line 21 by means of the pump 55 and detecting leakage of fluid along the diffusion section 19.

In this manner, the method detects the larger leakages during the low pressure air test, thus avoiding to flood the enclosure containing the combustion assembly 2 with the test fluid.

Subsequently, after having repaired the larger leakages, the method includes carrying out the test once again with a high pressure test fluid (higher than roughly 15 bars) in order to identify the less evident leakages.

The step of detecting leakages along the premix section 20 substantially includes disconnecting all head connectors 39 of each pipe 36, connecting the head connectors 39 to the compressor 57 (preferably one at a time) and feeding an air flow sufficient to pressurize each pipe 36 at least at 2 bars; detecting possible leakages at the respective tail connector 40 by means of a detector fluid, and finally reconnecting the head connector 40 to the connector 35.

After this check and after having replaced or repaired the connectors which show leakages, the method includes carrying out a test to verify the tightness of the head connectors 39. Such a test is carried out (with the gas turbine running and diffusing diesel) by feeding the premix line 20 with a pressurized fluid (preferably purging water or washing water) and detecting the leakages at the head connectors 39 with a detecting fluid or simply by means of a visual check.

Advantageously, the method and device according to the present invention are simple and reliably detect the leakages of the feeding circuit 3 thus reducing the risk of fire.

Finally, it is apparent that changes and variants can be made to the device and method for detecting leakage of liquid fuel in a combustion assembly of a gas turbine described there without because of this departing from the scope of protection of the appended claims.

## Claims

1. A method of detecting liquid fuel leakage in a gas turbine system combustion assembly (1), the combustion assembly (1) comprising a combustion chamber (2) equipped with a plurality of burner assemblies (5), each comprising a diffusion nozzle (15) and at least one premix nozzle (16); and a feed circuit (3), which feeds liquid fuel to the combustion chamber (2) and comprises a diffusion section (19) for supplying the diffusion nozzles (15), and a premix section (20) for supplying the premix nozzles (16);
the method comprising the steps of:
- sealing the diffusion nozzle (15) of each burner assembly (5);
- feeding a pressurized test fluid along the diffusion section (19);
- checking for test fluid leakage along the diffusion section (19).

2. A method as claimed in Claim 1, wherein the step of sealing the diffusion nozzle (15) of each burner assembly (5) comprises the step of inserting a stopper (52) into the diffusion nozzle (15) to plug the diffusion nozzle (15).

3. A method as claimed in Claim 1 or 2, wherein the stopper (52) comprises a main body (59) extending along a longitudinal axis (A) and made of deformable material; and a movable member (60) inserted partly inside the main body (59) and having a first end (62) with a head (63) located outside the main body (59).

4. A method as claimed in Claim 3, wherein the movable member (60) is movable between an open position, in which the head (63) does not rest against the main body (59), and a closed position, in which the head (63) rests against the main body (59) and deforms it in a direction substantially perpendicular to the axis (A).

5. A method as claimed in Claim 3 or 4, wherein the movable member (60) has a second end (64) with an eyelet (65) located outside the main body (59).

6. A method as claimed in Claim 5, wherein a recovery member (66) is coupled to the eyelet (65).

7. A method as claimed in any one of the foregoing Claims, wherein the step of feeding a pressurized test fluid along the diffusion section (19) comprises feeding a fluid at a pressure of at least roughly 7 bars.

8. A method as claimed in any one of the foregoing Claims, wherein the step of feeding a pressurized test fluid along the diffusion section (19) comprises feeding a fluid at a pressure of at most roughly 30 bars.

9. A method as claimed in any one of the foregoing Claims, wherein the test fluid is water.

10. A method as claimed in any one of Claims 1 to 8, wherein the test fluid is air.

11. A method as claimed in any one of Claims 1 to 8, wherein the test fluid is liquid nitrogen.

12. A method as claimed in any one of the foregoing Claims, and comprising the steps of feeding pressurized air along the diffusion section (19); and checking for air leakage along the diffusion section (19).

13. A method as claimed in Claim 12, wherein the steps of feeding pressurized air along the diffusion section (19) and checking for air leakage along the diffusion section (19) precede the step of feeding a pressurized test fluid along the diffusion section (19).

14. A method as claimed in Claim 12 or 13, wherein the step of feeding pressurized air along the diffusion section (19) comprises feeding air at a pressure of at most roughly 7-8 bars.

15. A method as claimed in any one of the foregoing Claims, wherein the step of checking for test fluid leakage along the diffusion section (19) comprises applying a detecting fluid to critical points along the diffusion section (19).

16. A method as claimed in any one of Claims 12 to 15, wherein the step of checking for air leakage along the diffusion section (19) comprises applying a detecting fluid to monitored points of the diffusion section (19).

17. A method as claimed in Claim 15 or 16, wherein the detecting fluid is a surface-active agent.

18. A device for detecting liquid fuel leakage in a gas turbine system combustion assembly (1), the combustion assembly (1) comprising a combustion chamber (2) equipped with a plurality of burner assemblies (5), each comprising a diffusion nozzle (15) and at least one premix nozzle (16); and a feed circuit (3), which feeds liquid fuel to the combustion chamber (2) and comprises a diffusion section (19) for supplying the diffusion nozzles (15), and a premix section (20) for supplying the premix nozzles (16); the device (50) comprising at least one stopper (52) for sealing the diffusion nozzle (15) of the burner assembly (5).

19. A device as claimed in Claim 18, wherein the stopper (52) comprises a main body (59) extending along a longitudinal axis (A) and made of deformable material; and a movable member (60) inserted partly inside the main body (59) and having a first end (62) with a head (63) located outside the main body (59).

20. A device as claimed in Claim 19, wherein the movable member (60) is movable between an open position, in which the head (63) does not rest against the main body (59), and a closed position, in which the head (63) rests against the main body (59) and deforms it in a direction substantially perpendicular to the axis (A).

21. A device as claimed in Claim 19 or 20, wherein the movable member (60) has a second end (64) with an eyelet (65) located outside the main body (59).

22. A device as claimed in Claim 21, wherein a recovery member (66) is coupled to the eyelet (65).

23. A device as claimed in any one of Claims 18 to 22, and comprising a test fluid tank (54), and at least one pump (55) for drawing test fluid from the tank (54).

24. A device as claimed in Claim 23, wherein the pump (55) is designed to pump the test fluid at a pressure ranging between roughly 7 and 20 bars.

25. A device as claimed in any one of Claims 18 to 24, and comprising at least one air compressor (57).

26. A device as claimed in Claim 25, wherein the air compressor (57) is designed to compress air to a pressure of roughly 7 bars.
